# EUROPEAN PATENT APPLICATION

(11) **EP 4 450 429 A1**
(43) Date of publication of application: **23.10.2024**
(21) Application number: 22911586.0
(22) Date of filing: 31.10.2022
(51) Int. Cl.: B65G 43/08

(54) **OBJECT IDENTIFICATION DEVICE**

(30) Priority: 23.12.2021 KR 20210186373
(71) Applicant: LG Energy Solution, Ltd., Seoul 07335 (KR)
(72) Inventor: KIM, Dukyou, Daejeon 34122 (KR)
(74) Representative: Hoffmann Eitle
(86) International application number: PCT/KR2022/016842
(87) International publication number: WO 2023/120948

(57) **Abstract**

An apparatus for identifying an object includes a light emitter disposed on one side of a conveyor belt configured to move an identification target object and configured to emit light toward the other side of the conveyor belt, a reflection part configured to reflect the light emitted by the light emitter to the one side of the conveyor belt, a pattern part provided in the identification target object and configured to form a pattern through which the light emitted by the reflection part passes, and a light receiver disposed on the one side of the conveyor belt and configured to receive the light having passed through the pattern part.

## Description

### [Technical Field]

This application is claims priority to Patent Application No. 10-2021-0186373 filed in the Republic of Korea on December 23, 2020, all of which are hereby expressly incorporated by reference into the present application.

The present disclosure relates to a transportation apparatus for a battery movement, more particularly, to a transportation apparatus for battery movement that may reduce the amount of shock transmitted to a tray carrying a battery, and a method of controlling the same.

### [Background Art]

A proximity sensor is one of position sensors or displacement sensors, but a sensor for detecting the position of an object approaching in a non-contact method is particularly referred to as a proximity sensor.

The proximity sensor may be categorized into a type of a proximity sensor having a hall element in which an internal current changes under the influence of magnetism and a permanent magnet combined to the hall element, another type including a lamp or light emitting diode and an optical sensor combined to the lamp or light, and a further type configured to detect capacitance.

Such the proximity sensor is generally used for a purpose of identifying a moving object having entered a certain distance.

The proximity sensor may be installed in a transportation device for distribution such as a conveyor belt to be used in controlling flow of goods.

As one example, when a proximity sensor installed an inlet portion of a belt detects goods introduced to a conveyor belt, the conveyor belt starts an operation for moving goods.

As another example, when a proximity installed in an outlet portion of a conveyor belt detects a logistics or distribution congestion or an obstacle at the outlet portion of the conveyor belt, the operation of the conveyor belt could be stopped.

As a further example, a proximity sensor installed on a conveyor belt may be configured to determine the amount of goods transmitted by the conveyor belt for a preset time period.

However, such a proximity sensor installed on a conveyor belt described above may determine only the amount of the entire goods having passed a preset position and it is difficult to determine which object has passed.

### [Description of Disclosure]

### [Technical Problems]

Accordingly, one object of the present disclosure is invented to solve the above-noted disadvantages of the prior art, and to provide an apparatus for identifying an object that may individually identify at least one of information on the location of a specific object and information on the moving time of a specific object.

Another object of the present disclosure is to provide an apparatus for identifying an object that may the location of a specific object and a movement path of a specific object.

Objects of the present invention are not limited to the above-described objects, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [Technical Solutions]

An apparatus for identifying an object according to an embodiment of the present disclosure may include a sensor configured to emit light through a light emitter and receive light through a light receiver; a reflection part configured to reflect the light emitted by the light emitter toward the light receiver; and a pattern part configured to form a pattern through which the light reflected by the reflection part passes.

An apparatus for identifying an object according to an embodiment of the present disclosure may include a light emitter disposed on one side of a conveyor belt configured to move an identification target object, and configured to emit light toward the other side of the conveyor belt; a reflection part configured to the light emitted by the light emitter to the one side of the conveyor belt; a pattern part provided in the identification target object and configured to form a pattern on the identification target object through which the light emitted by the reflection part passes; and a light receiver disposed on the one side of the conveyor belt and configured to receive the light having passed through the pattern part.

The pattern part may include a first pattern blocking between the light emitter and the reflection part; and a second pattern forming a path for light movement between the reflection part and the light receiver on the identification target object.

The reflection part may reflect light in a direction parallel to a direction in which the light emitted from the light emitter moves, and the second pattern may be formed through the identification target object along the direction in which the light emitted from the light emitter moves.

The apparatus for identifying the object may further include an infrared sensor configured to emit an infrared ray with the light emitter and receive the infrared ray with the light receiver.

The reflection part may include a reflector disposed on the other side of the conveyor belt and configured to reflect the infrared ray emitted by the infrared sensor toward the infrared sensor again.

The apparatus for identifying the object may further include a controller configured to recognize a type of the identification target object based on a pattern of light received by the light receiver.

The apparatus for identifying the object may further include a sensor configured to emit light with the light emitter and receive light with the light receiver. A plurality of sensors may be spaced a preset distance apart from each other along a longitudinal direction of the conveyor belt, and the controller may determine the location of each type of the identification target object based on a pattern of light received by each of the sensors.

The conveyor belt may be branched into a plurality of paths, and a movement path of an identification target object may be determined by determining positions of sensors having received a specific pattern of light among the plurality of sensors disposed in the plurality of branched paths respectively.

In another aspect of the present disclosure, a method of identifying an object according to an embodiment may include disposing a light emitter configured to emit light toward other side of a conveyor belt and a light receiver configured to receive the light on one side of a conveyor belt; disposing a reflection part configured to reflect the light emitted by the light emitter toward the one side of the conveyor belt on the other side of the conveyor belt; moving an identification target object provided with a pattern through which the light emitted by the light emitter and reflected by the reflection part passes on the conveyor belt; and determining the location of the identification target object based on a signal generated when the light receiver receives the light reflected by the reflection part.

The determining the location of the identification target object may include data-logging the signal of the light receiver based on time.

### [Advantageous Effects]

The apparatus for identifying the object may determine the type of the identification target object based on the pattern of the light or waves received by the sensor after passing through the pattern part provided on the identification target object, thereby effectively determining a current location and a movement timing of a specific identification target object.

In addition, the apparatus for identifying the object may change the shape of the pattern part for each type of the identification target object, thereby effectively providing information on the location of the identification target object for each type.

In addition, the apparatus for identifying the object may effectively determine the current location and the movement path of the specific identification target object, thereby quickly and effectively informs at which point the specific identification target object is located and which points it is conveyed through.

In addition to the above-described effects, specific effects of the present invention will be described together with the following detailed description for implementing the present invention.

### [Brief Description of Drawings]

FIG. 1 is a schematic view of an apparatus for identifying an object according to an embodiment of the present disclosure;
FIG. 2 is a schematically perspective view of an apparatus for identifying an object according to an embodiment of the present disclosure;
FIG. 3 is a view showing an example of a state in which an infrared signal is received in an apparatus for identifying an object according to an embodiment of the present disclosure;
FIG. 4 is a view showing a state of moving an object in a first section shown in FIG. 3;
FIGS. 5 to 7 are views showing a state of moving an object in a second section shown in FIG. 3;
FIG. 8 is a view showing a state of moving an object in a third section shown in FIG. 3;
FIG. 9 is a view showing another example of a pattern part;
FIG. 10 is a view showing an example of a conveyor belt configured of a plurality of branch points;
FIG. 11 is a view showing an example of a state in which an infrared signal is received in each of the sensors shown in FIG. 10; and
FIG. 12 is a view showing a movement path of an identification object detected based on information on the state of the infrared signal received in each of the sensors shown in FIG. 10.

### [Description of Reference numerals]

1: Conveyor belt
2: Identification object
10, 10a, 10b, 10c, 10d, 10e, 10f: Sensor
11: Light emitting part
13: Reception part
20: Reflection part
30, 30a: Pattern part
31, 3 1a: First pattern
33, 33a: Second pattern
40: Controller

### [DESCRIPTION OF SPECIFIC EMBODIMENTS]

The above-described aspects, features and advantages are specifically described hereunder with reference to the accompanying drawings such that one having ordinary skill in the art to which the present disclosure pertains can easily implement the technical spirit of the disclosure. In the disclosure, detailed descriptions of known technologies in relation to the disclosure are omitted if they are deemed to make the gist of the disclosure unnecessarily vague. Below, preferred embodiments according to the disclosure are specifically described with reference to the accompanying drawings. In the drawings, identical reference numerals can denote identical or similar components.

Although "first", "second", and the like may be used to describe various components, these components are not limited by these terms. These terms are only used to distinguish one component from another component, and unless otherwise stated, the first component may be the second component, of course.

The present invention is not limited to the embodiments disclosed below and susceptible to various modifications, and can be implemented in various different forms. The present embodiments are provided only to complete the disclosure of the present invention and assist those skilled in the art to completely understand the scope of the present invention. Accordingly, the present invention is not limited to the embodiments disclosed below, and it should be understood that configurations of any one embodiment and configurations of another embodiment are substituted or added to each other, and all modifications, equivalents and substitutes are fall within the technical idea and scope of the present invention.

The accompanying drawings are merely intended to facilitate understanding of embodiments disclosed in this specification, and the technical idea disclosed herein is not limited by the accompanying drawings, and it should be understood that all modifications, equivalents, and substitutes fall within the spirit and technical scope of the present invention. In the drawings, sizes or thicknesses of components may be exaggerated in consideration of the easy of understanding or the like, but the protection scope of the present invention should not be construed as being limited thereto.

The terms used herein are only used to describe a particular implementation or embodiment, and are not intended to limit the present invention. In addition, singular forms are intended to include plural forms as well, unless the context clearly indicates otherwise. In the present specification, terms such as "including," "composed of -," and the like are intended to indicate the existence of features, numbers, operations, actions, components, parts, or combinations thereof disclosed in the specification. It should be understood that the terms such as "including," "composed of -," and the like are not intended to preclude the possibility that one more other features, numbers, steps, actions, components, parts, or combinations thereof may be present or added.

Although the terms including ordinal numbers such as "first," "second," and the like may be used to describe various components, these components should not be limited by these terms. The terms are used only for the purpose of distinguishing one component from another.

When it is said that a component is "connected" to another component, it should be understood that the component is directly connected to another component or still another component may be interposed therebetween. On the other hand, when it is said that a component is "directly connected" or "directly linked" to another component, it should be understood that other components are not present therebetween.

When it is said that a component is on an "upper portion" or "lower portion" of another component, it should be understood that the component may be disposed directly on another component, as well as still another component may be interposed therebetween.

Unless otherwise defined, all terms used herein, including technical and scientific terms, have the same meaning as commonly understood by one of ordinary skill in the art to which the present invention belongs. It should be further understood that terms, such as those defined in commonly used dictionaries, should be interpreted as having a meaning that is consistent with their meaning in the context of the relevant art and are not to be interpreted in an idealized or overly formal sense unless expressly so defined herein.

In a state where an object to be identified (hereinafter, an identification target object) is placed on a conveyor belt, a direction in which the identification target object is moved along the conveyor belt is defined as forward and the reverse direction thereof is defined as rearward. For convenience sake, the forward and backward direction may be referred to as a first direction. In this incase, the forward direction may be one direction of the first direction and the rearward direction is the other direction of the first direction.

In addition, the direction of gravity may be defined as downward, and the reverse direction may be defined as upward.

A horizontal direction orthogonal to a front-back direction (or the forward-backward), that is, the width direction of the conveyor belt may be referred to as a left-right direction. For convenience sake, the left-right direction may be referred to as a second direction. The right direction may be one direction of the second direction and the left direction may be the other direction of the second direction.

The width direction of the conveyor belt may be referred to as a lateral direction. In this instance, the right side may be one side of the lateral direction and the left side may be the other side of the lateral direction.

The up-down direction mentioned above may be referred to as a third direction. The upward direction may be one direction of the third direction, and the downward direction may be the other direction of the third direction.

The up-down direction mentioned above may be a vertical direction. In this instance, a horizontal direction may include the front-back direction and the left-right direction, in other words, the first direction and the second direction.

Throughout the specification, when it says "A and/or B", it means A, B or A and B, unless otherwise specified, and when it says "C to D", it means C or more and D or less, unless otherwise specified.

### [Overall structure of Apparatus for identifying an object]

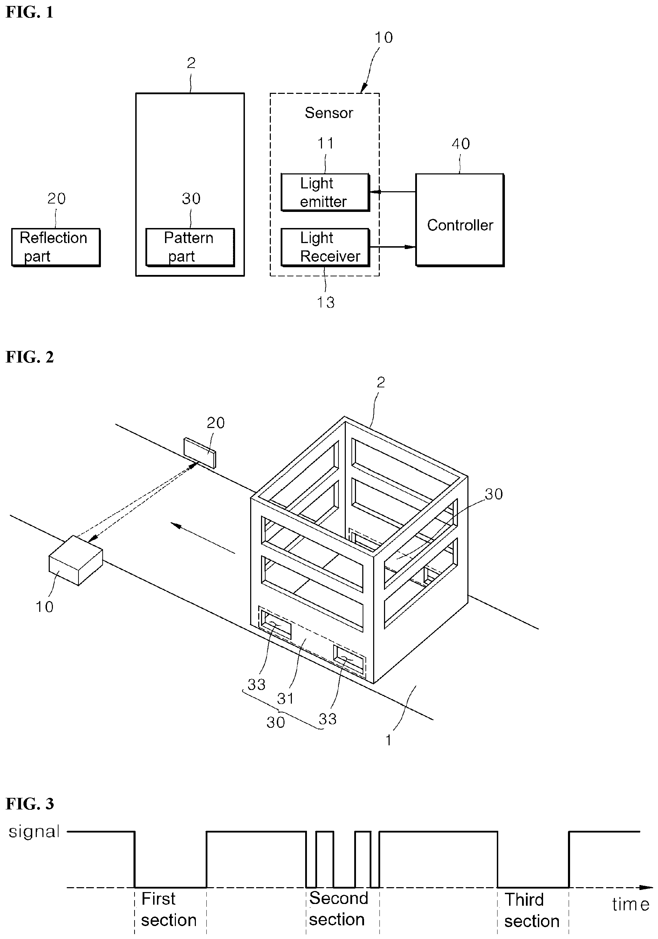

FIG. 1 is a schematic view of an apparatus for identifying an object according to an embodiment of the present disclosure. FIG. 2 is a schematically perspective view of an apparatus for identifying an object according to an embodiment of the present disclosure.

Referring to FIGS. 1 and 2, the apparatus for identifying the object may be provided on a conveyor belt 1 or an object being moved by the conveyor belt 1 in order to identify the object. The apparatus for identifying the object may include a sensor 10, a reflection part 20 and a pattern unit 30.

The sensor 10 may be provided adjacent to the conveyor belt 1. In this embodiment, the sensor 10 may be provided as a proximity sensor type using an infrared ray. The sensor 10 may include a light emitter 11 and a receiver 13.

The light emitter 11 may be disposed on one lateral side of the conveyor belt 1 moving an object to be identified (hereafter, an identification target object). The identification target object 2 may be an object to be identified by the apparatus for identifying the object and it may be an object having a pattern unit 30 which will be described later.

The light emitter 11 may be configured to emit light toward the other lateral side of the conveyor belt 1 from one lateral side thereof. In other words, the light emitted from the light emitter 11 may pass by the conveyor belt 1 in a lateral direction.

The light receiver 13 may be disposed on the one lateral side of the conveyor belt 1 together with the light emitter 11, specifically, adjacent to the light emitter 11. The light receiver 13 may be configured to receive the light emitted from the light emitter 11 and reflected by the reflection part 20 which will be described later.

In this embodiment, a proximity sensor using an infrared ray may be applied as the sensor 10. For example, the sensor 10 may be a proximity sensor configured of a light-emitting diode for emitting an infrared ray and an optical sensor that are combined to each other.

As one example, the light emitter 11 may include a light-emitting diode for emitting an infrared ray. The light receiver 13 may include an optical sensor for receiving and sensing the infrared ray.

Specifically, the sensor 10 may include an infrared sensor configured to emit an infrared ray with the light emitter 11 and receiving the infrared ray with the light receiver 13.

As another example, the sensor 10 may be provided as a radar or lidar configured to receive waves such as sound waves or radio waves transmitted and reflected back.

The reflection part 20 may be configured to reflect the light emitted by the light emitter 11 to the one lateral side of the conveyor belt 1.

In the embodiment, the reflection part 20 may be disposed on the other lateral side of the conveyor belt 1. For example, the reflection part may include a reflector configured to reflect the infrared ray transmitted by the infrared sensor to the infrared sensor again.

The light emitted from the light emitter 11 may reach the reflection part 20 after passing by the conveyer belt 1 in the lateral direction. The reflection part 20 may reflect the light toward the sensor 10 again. The light reflected by the reflection part 20 may pass by the conveyor belt 1 in the lateral direction again, and the light receiver 13 may detect the reflected light.

For example, the light emitter 11 may emit light in the lateral direction, and the reflection part 20 may reflect the light in a direction parallel to the traveling direction of the light emitted from the light emitter 11. Specifically, the sensor 10 may reflect the light toward the reflection part 20 in the lateral direction. The reflection part 20 may reflect the light in the lateral direction to return it to the sensor 10.

The pattern part 30 may be provided in the identification target object 2. The pattern part 30 may form a predetermined pattern through which the light passes the identification target object 2. The pattern 30 may include a first pattern 31 and a second pattern 33.

The first pattern 31 may be a portion of the pattern part 30 that blocks between the light emitter 11 and the reflection part 20. The second pattern 33 may form a path of the light travelling between the reflection part 20 and the light receiver 13 on the identification target object 2.

For example, the identification target object 2 may be formed in a box shape capable of accommodating goods. The pattern 30 may be provided on a lateral surface of the identification target object 2.

As one example, the identification target object 2 may be formed in a shape of hexahedral box, and the pattern part 30 may be provided on a lateral surface of the identification target object 2. At this time, the first pattern 31 may be a closed portion on the lateral surface of the identification target object 2 and the second pattern 33 may be an open portion on the lateral surface.

In other words, the second pattern 33 may be formed in a shape penetrating the lateral surfaces of the identification target object 2 in the lateral direction, and the first pattern 31 may be formed including the other area of the lateral surfaces that are not penetrated by the second pattern 33.

When a pair of lateral surfaces are disposed in the identification target object 2 in the lateral direction, the pattern part 30 may be formed in each of the lateral surfaces of the identification target object 2 in the same shape.

For example, if the second pattern 33 is formed in an 'L' shape on one lateral surface of the identification target object 2, the same 'L' -shaped second pattern 33 may be formed in the other lateral surface of the identification target object 2. The second patterns 33 formed in the lateral surfaces may be disposed at positions overlapping in the lateral direction.

The apparatus for identifying the object according to this embodiment may further include a controller 40. The sensor 10 may detect the movement of the identification target object passing a point where the sensor 10 is installed and transmit a signal corresponding to the result of the detection to the controller 40.

For example, the sensor 10 may generate a signal corresponding to the pattern of the light received by the light receiver 13, and then transmit the generated signal to the controller 40.

The controller 40 may recognize the type and kind of the identification target object 2 based on the signal transmitted by the sensor 10. In other words, the controller 40 may find the kind of the identification target object 2 based on the pattern of the light received in the light receiver 13.

According to an embodiment, the light emitter 11 and the light receiver 13 are disposed adjacent to each other, and may be provided on one side of the conveyor belt 1. The reflection part 20 may be provided on the other side of the conveyor belt 1. In this arrangement structure, the light emitted from the corresponding light emitter 11 must be accurately reflected by the reflection part 20 and incident again to the light receiver 13 so that the light receiver 13 can receive it. This structure has an excellent effect of preventing the light receiver 13 from being disturbed by other unintended optical signals by optically blocking the light emitted from the corresponding light emitter 11 and emitted from other places from entering the light receiver 13. In particular, the more light emitters installed around the conveyor belt 1 and the more complex the conveyor belt 1 is three-dimensionally arranged, the higher the possibility of signal disturbance between the sensors installed at different positions. The structure of the sensor and the reflection part according to the embodiment may have an excellent effect of signal disturbance prevention.

Since both the light emitter 11 and the light receiver 13 to be provided with power are disposed on one side of the conveyor belt 1, there is also an advantage in that the equipment setting is simple, compared to the light emitter disposed on onside of the conveyor belt and the light receiver disposed on the other side thereof.

### [One application example of Apparatus for identifying an object]

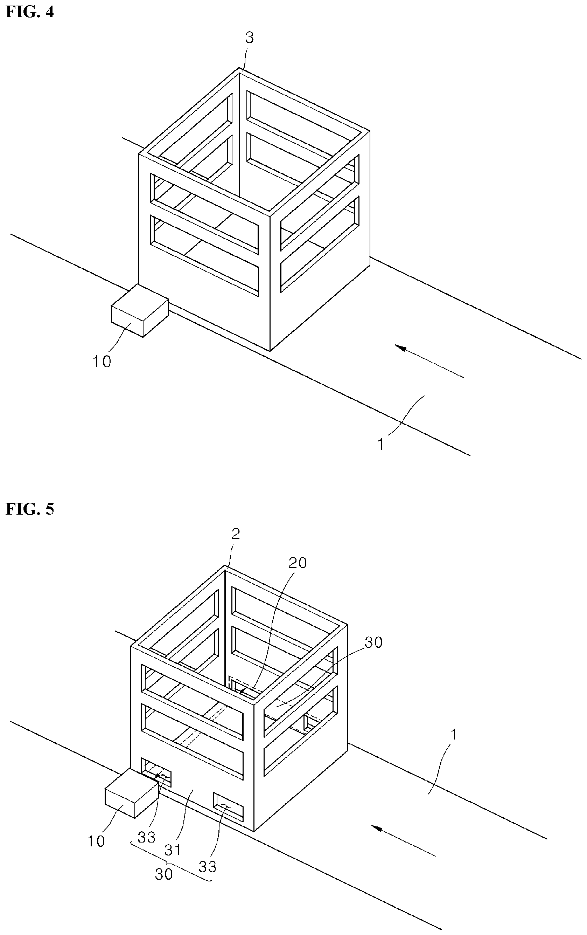

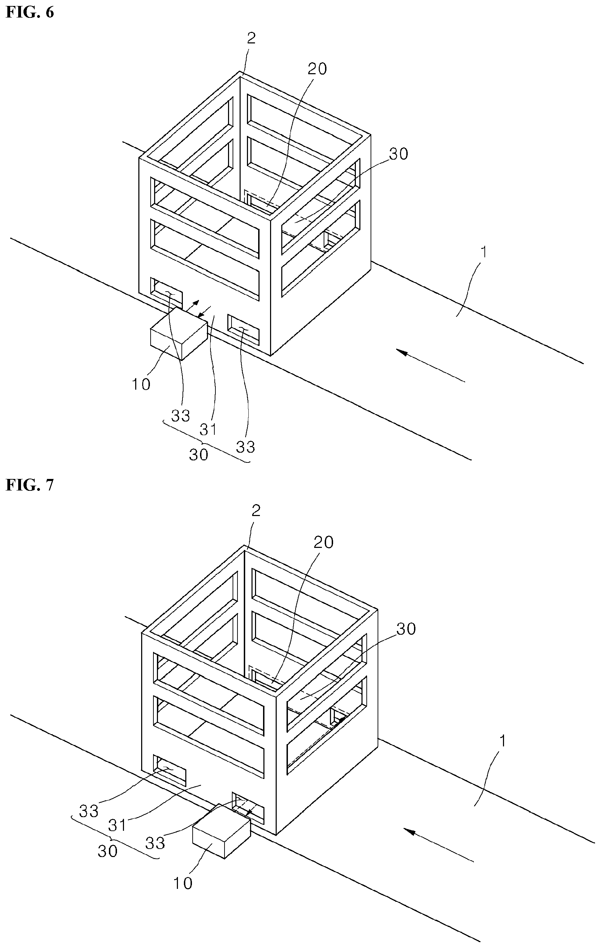

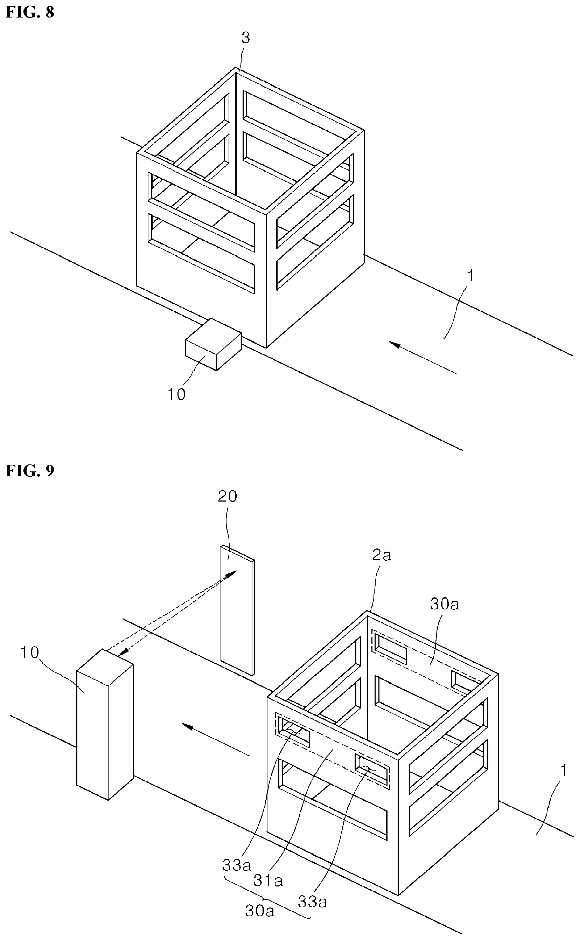

FIG. 3 is a view showing an example of a state in which an infrared signal is received in an apparatus for identifying an object according to an embodiment of the present disclosure. FIG. 4 is a view showing a state of moving an object in a first section shown in FIG. 3. FIGS. 5 to 7 are views showing a state of moving an object in a second section shown in FIG. 3. FIG. 8 is a view showing a state of moving an object in a third section shown in FIG. 3. FIG. 9 is a view showing another example of a pattern part.

Hereinafter, referring to FIGS. 3 to 9, the operation and effect of an apparatus for identifying an object according to an embodiment will be described.

Referring to FIGS. 1 to 3, the apparatus for identifying the object may be used to finding the kind or type of an object conveyed by the conveyor belt 1.

As shown in FIGS. 3 and 4, when the object 3 conveyed by the conveyor belt 1 is passing an installation point of the sensor 10, the sensor may detect that the apparatus for identifying the object is passing the corresponding point.

For example, unless the object 3 is provided with the pattern part or unless the shape like the second pattern is formed on the pattern part provided in the object 3, the sensor 10 may transmit a signal corresponding to a first section of FIG. 3 to the controller (40, see FIG. 1).

After receiving the transmitted signal, the controller 40 may determine that an object defined by the signal corresponding to the first section has passed through the corresponding point. For example, when receiving the signal corresponding to the first section from the sensor 10, the controller 40 may determine that as a normal object 3 that does not require identification of the type.

As shown in FIGS. 3 and 5 to 7, when a specific identification target object 2 conveyed by the conveyor belt 1 passes a point at which the sensor is installed, the apparatus for identifying the object may determine that a specific identification target object 2 passes a corresponding point.

For example, when an identification target object 2 provided with the pattern part 30 passes a corresponding point, the sensor 10 may transmit a signal corresponding to a second section of FIG. 3 to the controller (40, see FIG. 1).

After receiving the signal, the controller 40 may determine that an identification target object 2 defined by the signal corresponding to the second section has passed the corresponding point. For example, when receiving the signal corresponding to the second section from the sensor 10, the controller 40 may determine that as a specific identification target object 2 that requires location determination or detection.

As shown in FIGS. 3 and 8, when an object 3 conveyed by the conveyor belt 1 passes a point at which the sensor 10 is installed, the apparatus for identifying the object may determine that an object 3 passes corresponding point.

For example, when an object 3 not provided with the pattern part 30 or when a shape like the second pattern is not formed on the pattern part provided on the object 3, the sensor 10 may transmit a signal corresponding to a third section of FIG. 3 to the controller (40, see FIG. 1).

After receiving the signal, the controller 40 may determine that an object defined by the signal corresponding to the third section has passed the corresponding point. For example, when receiving the signal corresponding to the third section from the sensor 10, the controller 40 may determine that as a normal object 3 that requires no determination of the type of the object.

As described above, the apparatus for identifying the object may effectively determine the current location of the specific identification target object 2 and a movement timing of the specific identification target object 2 by determining the kind of the identification target object 2 based on the pattern of the light or waves transmitted to the sensor 10 after passing through the pattern part 30 provided in the identification target object 2.

In addition, the apparatus for identifying the obj ect may easily and quickly classify various types of identification target objects 2 for each type and effectively provide location information on the identification target object 2 for each type by using a method of changing the shape of the pattern part 30 for each type of the identification objects 2.

The apparatus for identifying the object according to an embodiment may include a plurality of sensors. The plurality of sensors may be spaced a preset distance apart from each other along a longitudinal direction of the conveyor belt 1.

The controller 40 may more effectively determine the current location of the specific identification target object 2 by determining the type of the identification target object 2 based on the pattern of the light or waves received to each of the sensors 10.

Meanwhile, in the embodiment, it is shown that the pattern part 30 is disposed in a lower portion of the identification target object 2 but the present disclosure is not limited thereto.

As another example, as shown in FIG. 9, the pattern part 30a may be disposed in an upper portion of the identification target object 2a. In this instance, the light transmitted from the sensor or reflected by the reflection part 20 may pass the upper portion of the identification target object 2a.

Accordingly, the possibility may be effectively reduced that the travelling of the light emitted from the sensor 10 or reflected from the reflection part 20 might be affected by the goods accommodated in the identification target object 2a.

### [Another application example of Apparatus for identifying an object]

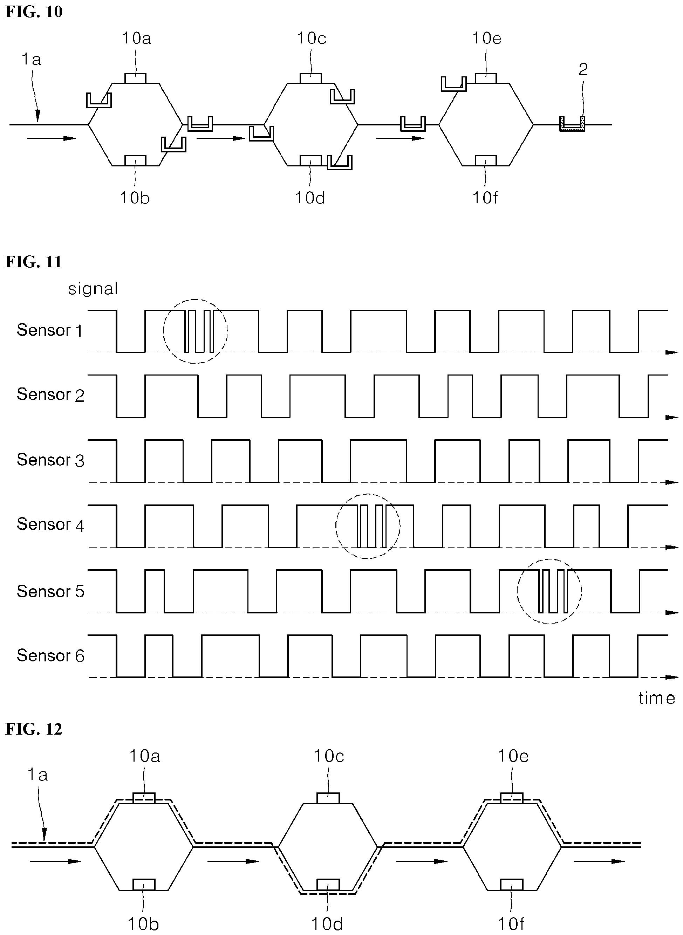

FIG. 10 is a view showing an example of a conveyor belt configured of a plurality of branch points. FIG. 11 is a view showing an example of a state in which an infrared signal is received in each of the sensors shown in FIG. 10. FIG. 12 is a view showing a movement path of an identification object detected based on information on the state of the infrared signal received in each of the sensors shown in FIG. 10.

As shown in FIG. 10, an apparatus for identifying an object may be applied to a conveyor belt 1 configured of a plurality of branched points.

The apparatus for identifying the object may include a plurality of sensors 10a ∼10f. The sensers 10a to 10f may be disposed on each branched paths of the conveyor belt 1, respectively.

The apparatus for identifying the object applied to the conveyor belt 1a having the plurality of branched points may be configured to determine the movement path of a specific identification target object 2 conveyed by the conveyor belt 1.

For example, when identifying the locations of the sensors receiving light with a specific pattern, among the plurality of sensors 10a to 10f, the location of a specific identification target object 2 may be identified.

As one example, as shown in FIG. 11, a first sensor 10a, a fourth sensor 10d and a fifth sensor 10e (Sensor 1, Sensor 4 and Sensor 5 of FIG. 11) may receive light with a specific pattern sequentially. In this instance, the object identifying apparatus may determine that the specific identification target object 2 (see FIG. 10) has passes through the paths shown in FIG. 12, in other words, a point at which the first sensor 10a is disposed, a point at which the fourth sensor 10d is disposed and a point at which the fifth sensor 10e is disposed.

As described above, the object identifying apparatus may very quickly and effectively provide information on which point the specific identification target object 2 is currently located and which points the specific identification target object 2 have passed and been conveyed by effectively determining the current location and the movement path of the specific identification target object 2.

In addition, the object identifying apparatus according to the present disclosure may detect the individual movement of the various types of identification target object objects 2 by diversifying the type of the pattern part 30. Alternatively, the object identifying apparatus may facilitate easy and quick individual detecting of all the identification target objects 2 by changing the shape of the pattern part 30. In particular, the object identifying apparatus according to the embodiment may intuitively figure out the location of the identification target object 2 for each time based on data logging shown in FIG. 11.

### [Object identifying method]

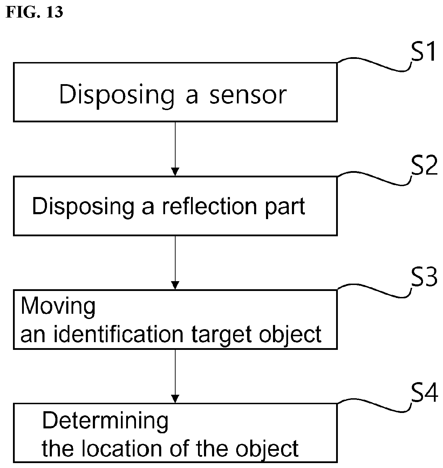

Referring to FIG. 13, a method of identifying an object using the above-described object identifying apparatus will be described.

The sensor 10 is mounted to one side of the conveyor belt 1 configured to conveying an identification target object (S1).

The sensor 10 may include a light emitter 11 configured to emit light toward the other side of the conveyor belt 1 and a light receiver configured to receive the light. The light emitter 11 and the light receiver 13 may be disposed adjacent to each other.

Next, the reflection part 20 is disposed on the other side of the conveyor belt 1 to reflect the light emitted by the light emitter 11 to the one side of the conveyor belt 1 (S2).

The light emitter 11 may emit light in a direction substantially perpendicular to the movement direction of the conveyor belt 1. The reflection part 20 may be disposed at a position at which light irradiated by the light emitter may be incident on the reflection part 20. The reflection part may be disposed with a surface adjusted so that the emitted light may incident in a substantially perpendicular direction.

Then, the light reflected by the reflection part 20 may be incident on the light receiver 13 disposed adjacent to the light emitter 11 again.

Next, an identification target object 2 provided with a pattern, through which the light reflected by the reflection part 20 after emitted from passes, may be prepared.

The identification target object 2 is conveyed on the conveyor belt 1 (S3). In this instance, the plurality of sensors 10 provided along the movement path of the conveyor belt 1, the logging data (see FIG. 11) stored by the reflection part 20, and the signal pattern determined as the identification target object 2 based on the movement path of the identification target object 2 may be recorded.

The object identifying method may locate the identification the identification target object 2 based on the signal generated when the light receiver 13 received the light reflected by the reflection part 20 (S4). In this process, the logging data shown in FIG. 11 may be used.

Although the present invention has been described with reference to the embodiments shown in the drawings, it is to be understood that this is only exemplary, and those skilled in the art can make various modifications and equivalent other embodiments. Therefore, scope of technical protection of the present invention should be determined by the claims below.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An apparatus for identifying an object comprising:
a light emitter disposed on one side of a conveyor belt configured to move an identification target object and configured to emit light toward other side of the conveyor belt;
a reflection part configured to reflect the light emitted by the light emitter to the one side of the conveyor belt;
a pattern part provided in the identification target object and configured to form a pattern on the identification target object through which the light emitted by the reflection part is configured to pass; and
a light receiver disposed on the one side of the conveyor belt and configured to receive the light having passed through the pattern part.

2. The apparatus for identifying the object of claim 1, wherein the pattern part comprises,
a first pattern blocking between the light emitter and the reflection part; and
a second pattern forming a path for light movement between the reflection part and the light receiver on the identification target object.

3. The apparatus for identifying the object of claim 2, wherein the reflection part is configured to reflect light in a direction parallel to a direction in which the light emitted from the light emitter moves, and
the second pattern is formed through the identification target object along the direction in which the light emitted from the light emitter moves.

4. The apparatus for identifying the object of claim 1, further comprising:
an infrared sensor configured to emit an infrared ray with the light emitter and receive the infrared ray with the light receiver.

5. The apparatus for identifying the object of claim 4, wherein the reflection part comprises,
a reflector disposed on the other side of the conveyor belt and configured to reflect the infrared ray emitted by the infrared sensor toward the infrared sensor again.

6. The apparatus for identifying the object of claim 1, further comprising:
a controller configured to recognize a type of the identification target object based on a pattern of light received by the light receiver.

7. The apparatus for identifying the object of claim 6, further comprising:
a sensor configured to emit light with the light emitter and receive light with the light receiver,
wherein a plurality of sensors are spaced a preset distance apart from each other along a longitudinal direction of the conveyor belt, and
the controller is configured to determine the location of each type of the identification target object based on a pattern of light received by each of the sensors.

8. The apparatus for identifying the object of claim 6, wherein the conveyor belt is branched into a plurality of paths, and
a movement path of an identification target object is determined by determining positions of sensors having received a specific pattern of light among the plurality of sensors disposed in the plurality of branched paths respectively.

9. A method of identifying an object comprising:
disposing a light emitter configured to emit light toward other side of a conveyor belt and a light receiver configured to receive the light on one side of a conveyor belt;
disposing a reflection part configured to reflect the light emitted by the light emitter toward the one side of the conveyor belt on the other side of the conveyor belt;
moving an identification target object provided with a pattern through which the light emitted by the light emitter and reflected by the reflection part passes on the conveyor belt; and
determining the location of the identification target object based on a signal generated when the light receiver receives the light reflected by the reflection part.

10. The method of identifying the object of claim 9, wherein the determining the location of the identification target object comprises,
data-logging the signal of the light receiver based on time.
